# EUROPÄISCHE PATENTSCHRIFT

(11) **EP 2 191 344 B1**
(45) Veröffentlichungstag und Bekanntmachung des Hinweises auf die Patenterteilung: **29.08.2018**
(21) Anmeldenummer: 08736485.7
(22) Anmeldetag: 23.04.2008
(51) Int. Cl.: G06F 1/20

(54) **INTEGRIERTE SCHALTUNGSANORDNUNG FÜR SICHERHEITSKRITISCHE REGELUNGSSYSTEME**
INTEGRATED CIRCUIT ARRANGEMENT FOR SAFETY CRITICAL REGULATION SYSTEMS
ENSEMBLE DE CIRCUITS INTÉGRÉS POUR SYSTÈMES DE RÉGULATION DÉTERMINANTS POUR LA SÉCURITÉ

(30) Priorität: 26.04.2007 DE 102007020171; 02.06.2007 DE 102007025827
(43) Veröffentlichungstag der Anmeldung: 02.06.2010
(73) Patentinhaber: Continental Teves AG & Co. OHG, 60488 Frankfurt (DE)
(72) Erfinder: KIRCHBAUM, Andreas, 64287 Darmstadt (DE); ENGELMANN, Mario, 61449 Steinbach/Ts. (DE); MICHEL, Frank, 61191 Rosbach V.d.Höhe (DE); DIJK, Luc van, 47559 Kranenburg (DE); FEY, Wolfgang, 88131 Bodolz (DE); TRASKOV, Adrian, 61449 Steinbach (DE); HEINZ, Micha, 64289 Darmstadt (DE)
(86) Internationale Anmeldenummer: PCT/EP2008/054905
(87) Internationale Veröffentlichungsnummer: WO 2008/132106

(56) Entgegenhaltungen:
- EP-A- 0 496 534
- WO-A-95/30200
- WO-A-2005/036285
- US-A1- 2003 110 012
- US-A1- 2004 037 346

## Beschreibung

Die Erfindung betrifft eine integrierte Schaltungsanordnung gemäß Oberbegriff von Anspruch 1 sowie deren Verwendung in Kraftfahrzeugen.

Druckschrift DE 195 29 434 A1 beschreibt ein Mikroprozessorsystem mit Kernredundanz für sicherheitskritische Regelungsapplikationen. Bei diesem bekannten Mikroprozessorsystem sind zwei synchron betriebene Zentraleinheiten auf einem oder mehreren Chips vorgesehen, die die gleichen Eingangsinformationen erhalten und das gleiche Programm abarbeiten. Die beiden Zentraleinheiten sind dabei über separate Bus-Systeme an die Festwert- (ROM) und an die Schreib-Lese-Speicher (RAM) sowie an Eingabe- und Ausgabeeinheiten angeschlossen. Die Bus-Systeme sind untereinander durch Treiberstufen bzw. Bypässe verbunden, die den beiden Zentraleinheiten ein gemeinsames Lesen und Abarbeiten der zur Verfügung stehenden Daten, einschließlich der Prüfdaten und Befehle ermöglichen. Das System ermöglicht eine Einsparung von Speicherplatz. Nur eine der beiden Zentraleinheiten ist (direkt) mit einem vollwertigen Festwert- und einem Schreib-Lese-Speicher verbunden, während die Speicherkapazität des zweiten Prozessors auf Speicherplätze für Prüfdaten in Verbindung mit einem Prüfdatengenerator beschränkt ist. Zugriff zu allen Daten besteht über die Bypässe. Dadurch sind beide Zentraleinheiten in der Lage, jeweils das vollständige Programm abzuarbeiten.
In Druckschrift WO 2005/036285 A1 wird eine integrierte Schaltungsanordnung für Kraftfahrzeugbremssysteme vorgeschlagen, welche ein Mikroprozessorsystemmodul, ein Leistungsmodul zur Ansteuerung der Aktuatorik und ein Überwachungsmodul mit Sicherheitsschaltkreisen aufweist, wobei diese Module der integrierten Schaltungsanordnung alle auf einem gemeinsamen Chip angeordnet sind. Diese integrierte Schaltungsanordnung weist technische Mittel und Ausbildungsmerkmale zur elektrischen Entkopplung der Module auf. Mögliche thermische Kopplungen zwischen den unterschiedlichen Modulen bleiben allerdings weitgehend unberücksichtigt.
US 2003/0110012 A1 schlägt eine Verteilung von Verarbeitungsaktivitäten auf die Hardware vor, die auf Informationen zum Energieverbrauch und zum Erwärmungsgrad beruht. Damit wird ein effizienterer Betrieb möglich.
WO 2005/036285 A1 zeigt eine integrierte Schaltungsanordnung für sicherheitskritische Anwendungen, welche mehrere zusammenwirkende Funktionsgruppen umfasst. Die Schaltkreise sind dabei auf einem gemeinsamen Chip oder Chipträger zusammengefasst, wobei trotzdem eine zuverlässige Fehlererkennung möglich ist.
US 2004/037346 A1 wird eine Vorrichtung zur Anpassung der Temperatur in einer integrierten Schaltungsanordnung mit einem Mikroprozessor mit Mehrfachkern beschrieben. Dafür werden Temperatursensoren in den Kernen positioniert. Wird eine hohe Temperatur mittels der Sensoren identifiziert, so werden Frequenz und Spannung des Kerns angepasst.
EP 0 496 534 A zeigt einen Computer, der mit Sensoren zur Messung der Umgebungstemperatur und der Feuchtigkeit ausgestattet ist. Abhängig von den Messungen kann die Leistung des Computers angepasst werden.
Die Aufgabe der vorliegenden Erfindung besteht darin, eine auf einem Chip oder Chipträger integrierte Schaltungsanordnung mit integriertem Mikroprozessorsystem-, Leistungs- und Überwachungsmodul für sicherheitskritische Anwendungen vorzuschlagen, welche die Ausfallsicherheit ausgehend von US 2003/0110012 A1 verbessert.

Die Aufgabe wird erfindungsgemäß gelöst durch die integrierte Schaltungsanordnung gemäß Anspruch 1.
Der Erfindung liegt der Gedanke zu Grunde, eine auf einem gemeinsamen Chip oder Chipträger angeordnete integrierte Schaltungsanordnung, umfassend sowohl Datenverarbeitungsschaltungen als auch Leistungsschaltungen, mit mindestens einem Temperatursensor auszustatten, um eine Chiptemperatur zu erfassen, insbesondere im Wesentlichen in einem definierten Bereich der integrierten Schaltungsanordnung.
Durch den mindestens einen Temperatursensor kann das Erreichen bzw. die Überschreitung einer definierten Temperaturschwelle in einem definierten Bereich des Chips erfasst werden. Mittels mehrerer, zueinander beabstandet auf dem Chip angeordneter Temperatursensoren, können Temperaturkopplungen und/oder die Ausbreitung thermischer Energie zwischen Modulen bzw. Teilsystemen der integrierten Schaltungsanordnung erfasst werden.
Die Integration der Module der integrierten Schaltungsanordnung auf einem gemeinsamen Chip ist kostengünstiger, als separate Chips für die einzelnen Module oder für Modulgruppen bereitzustellen.
Die integrierte Schaltungsanordnung weist zwei redundante Überwachungsmodule auf, welche insbesondere im Wesentlichen auf gegenüberliegenden Randbereichen, ganz besonders bevorzugt in unterschiedlichen Ecken, des Chips und/oder von einander beabstandet angeordnet sind. Hierdurch wird eine erhöhte Ausfallsicherheit des Überwachungsmoduls erreicht.

Die integrierte Schaltungsanordnung weist zwei redundante Überwachungsmodule auf, die bevorzugt jeweils eine Schaltung zur Selbstüberwachung umfassen, wobei diese beiden Überwachungsmodule miteinander verbunden sind und so ausgebildet sind, dass sie ihre Selbstüberwachungsdaten miteinander vergleichen können um einen möglichen Fehler eines Überwachungsmoduls zu erkennen. Dadurch, dass ein Fehler in einem Überwachungsmodul erkannt werden kann, wird die Zuverlässigkeit des Gesamtsystems weiter erhöht und entsprechende Maßnahmen, wie beispielsweise ein kontrolliertes Abschalten der integrierten Schaltungsanordnung, kann im Fehlerfall veranlasst werden.
Es ist zweckmäßig, dass die Temperaturüberwachungseinheit Teil des Überwachungsmoduls ist, weil das sicherheitsrelevante Überwachungsmodul für eine Abschaltung der integrierten Schaltungsanordnung oder Teile von dieser verantwortlich ist und relativ hohen Anforderungen die Robustheit betreffend genügen muss. Die Temperaturüberwachungseinheit ist insbesondere zur Verbesserung der Zuverlässigkeit bei kritischen Temperaturen nahe an den Abschaltpfaden des Überwachungsmoduls auf dem Chip angeordnet.
Die Überwachungsmodule weisen eine unabhängige Energieversorgungseinrichtung auf, wodurch die Ausfallsicherheit des Moduls weiter verbessert werden kann. Insbesondere ist die Energieversorgungseinrichtung des Überwachungsmoduls im Wesentlichen direkt mit einer externen Energiequelle verbunden.

Unter einem Mikroprozessorsystemmodul wird vorzugsweise ein kernredundantes Mikroprozessorsystem bzw. ein Mikrokontroller oder ein Mikroprozessorsystem mit symmetrischer Redundanz oder ein Mikroprozessorsystem mit asymmetrischer Redundanz verstanden. Insbesondere weist das Mikroprozessorsystemmodul zwei redundante Prozessorkerne auf, denen jeweils oder gemeinsam sowohl zumindest ein Festwertspeicher als auch zumindest ein Schreibe-Lese-Speicher zugeordnet sind. Besonders bevorzugt ist das Mikroprozessorsystemmodul entsprechend dem oben beschriebenen Mikroprozessorsystem gemäß einem Ausführungsbeispiel der Druckschrift DE 195 29 434 A1 ausgebildet. Solche Ausbildungsformen des Mikroprozessorsystemmoduls dienen zur Erhöhung der Betriebssicherheit der Schaltungsanordnung.

Die integrierte Schaltungsanordnung weist zweckmäßigerweise zwei Mikroprozessorsystemmodule auf, welche jeweils einen Prozessorkern und einen Schreibe-Lese-Speicher umfassen. Die Datenverarbeitung dieser beiden Mikroprozessorsystemmodule wird insbesondere durch zwei Prüfeinrichtungen überwacht, welche jeweils mit den Prozessorkernen und den Schreibe-Lese-Speichern verbunden sind und sich gegenseitig ebenfalls auf Fehler überwachen. Dabei weist besonders bevorzugt eines der Mikroprozessorsystemmodule keinen eigenen Festwertspeicher auf, sondern benutzt den Festwertspeicher des anderen Moduls mit.

Unter einem Leistungsmodul wird bevorzugt eine Funktionsgruppe, umfassend Aktuatortreiber bzw. eine Leistungsschaltkreiskomponente zur Ansteuerung externer Verbraucher und eine Energieversorgungseinheit, verstanden. Insbesondere weist das Leistungsmodul zusätzlich eine Watchdogeinheit sowie einen Analog-/Digitalwandler zur Messung der Versorgungsspannung und besonders bevorzugt zur Messung externer Sensorsignale auf.

Das Überwachungsmodul ist zweckmäßigerweise elektrisch und thermisch robuster ausgelegt als der übrige Teil der integrierten Schaltungsanordnung. Dies wird insbesondere mittels der Dimensionierung der elektronischen Bauelemente erreicht.

Bevorzugt umfasst das Überwachungsmodul mindestens einen Monitorschaltkreis mit Abschaltpfaden zumindest für externe Verbraucher bzw. Aktuatoren.

Unter der Anordnung der integrierten Schaltungsanordnung auf einem Chip wird vorzugsweise die gemeinsame Anordnung aller elektronischen Bauelemente der integrierten Schaltungsanordnung auf einem gemeinsamen Chipträger verstanden.

Unter einem Teilsystem der integrierten Schaltungsanordnung werden bevorzugt im Wesentlichen in sich funktional abgeschlossene Schaltungseinheiten und/oder Programme verstanden, insbesondere einzelne Module, Schnittstelleneinheiten, Energieversorgungseinheiten, Logikeinheiten, Leistungsschaltkreise, insbesondere zur Ansteuerung externer Verbraucher, Test- bzw. Überwachungsschaltungen und/oder Mikrokontrollersysteme bzw. Teile eines Mikrokontrollersystems.

Unter einem Bereich im Wesentlichen zwischen den Modulen und/oder zwischen Teilsystemen wird vorzugsweise auch ein Grenzbereich dieser Module bzw. Teilsysteme verstanden.

Es ist zweckmäßig, dass dem mindestens einen Temperatursensor wenigstens eine Temperaturüberwachungseinheit zugeordnet ist, welche mittels einer Auswerteschaltung, insbesondere umfassend mindestens eine Komparatorschaltung, und/oder eines Auswerteprogramms die Temperaturdaten des einen oder der mehreren Sensoren auswertet und zumindest Teilsysteme bzw. Teilbereiche der integrierten Schaltungsanordnung abschalten und/oder in einen Notbetriebsmodus mit eingeschränkter Funktionalität versetzen kann bzw. dies veranlassen kann. Hierdurch kann ein kontrolliertes, insbesondere schrittweises Abschalten der integrierten Schaltungsanordnung im Falle einer Überhitzung durchgeführt werden.

Die Auswerteschaltung der Temperaturüberwachungseinheit ist so ausgelegt, dass diese die Temperatursensordaten vorzugsweise entsprechend dem zeitlichen Temperaturverlauf und/oder bezüglich einer oder mehrerer Temperaturschwellen und/oder mindestens einer Temperaturschwellenfunktion auswertet.

Die Temperaturüberwachungseinheit weist bevorzugt eine Sensorselbsttestschaltung auf, die einen oder mehrere Temperatursensoren und insbesondere die Auswerteschaltung und/oder das Auswerteprogramm bezüglich ihrer korrekten Funktionsweise testet. Besonders bevorzugt ist die Sensorselbsttestschaltung so ausgelegt, dass sie das Ausgangssignal mindestens eines Temperatursensors verzerrt und/oder mit einem Spannungsoffset beaufschlagt und dadurch die korrekte Funktionsweise der Auswerteschaltung bzw. des Auswerteprogramms testet. Die Sensorselbsttestschaltung wird dabei ganz besonders bevorzugt so angesteuert bzw. ist so ausgelegt, dass sie einen solchen Test des einen Sensors oder mehrerer Sensoren zyklisch durchführt. Die Auswerteschaltung weist besonders bevorzugt wenigstens einen Komparator zum Vergleich mindestens eines Sensorsignals mit zumindest einem definierten Referenzwert, welcher insbesondere einer definierten Grenztemperatur entspricht, auf. Hierdurch kann eine softwareunabhängige Auswertung der Sensorsignale durchgeführt werden. Dies ist insbesondere dann relevant, falls eine korrekte Funktionsweise des Mikroprozessorsystemmoduls, beispielsweise aufgrund einer kritischen Temperatur des Mikroprozessorsystemmoduls, nicht garantiert werden kann.

Es ist zweckmäßig, dass der wenigstens eine Temperatursensor, insbesondere jeweils, redundant vorhanden ist. Dabei werden die Ausgangssignale der redundanten Sensoren zur Detektion möglicher Sensorfehler miteinander durch die mindestens eine Sensorselbsttestschaltung verglichen. Die redundanten Temperatursensoren sind insbesondere alternativ nebeneinander oder in Bereichen des Chips mit im Wesentlichen ähnlichem Temperaturverhalten, wie beispielsweise voneinander beabstandet in einem Grenzbereich zwischen zwei Modulen, angeordnet.

Es ist zweckmäßig, dass die einzelnen Module der integrierten Schaltungsanordnung jeweils bezüglich der Anordnung ihrer elektronischen Bauelemente auf dem Chip im Wesentlichen nicht durchmischt oder ineinandergreifend oder verstreut oder verteilt sondern im Wesentlichen kompakt als eigenständige Bereiche auf dem Chip ausgebildet sind. Durch diese Maßnahme wird die elektrische und thermische Kopplung zwischen den Modulen begrenzt.

Die einzelnen Module bzw. das wenigstens eine Mikroprozessorsystemmodul, das mindestens eine Leistungsmodul sowie das wenigstens eine Überwachungsmodul sind bevorzugt teilweise oder im Wesentlichen vollständig durch elektrisch isolierte Bereiche, insbesondere durch dotierte Guard-Ringe und/oder eingeätzte Barrieren, wie beispielsweise Trenches oder Deep-Trenches, voneinander elektrisch entkoppelt.

Die integrierte Schaltung weist vorzugsweise zwischen ihren Modulen mindestens ein Verbindungsmodul bzw. Crossing-Modul auf, durch welches zumindest zwei Module miteinander verbunden sind, insbesondere das Mikroprozessorsystemmodul mit dem Leistungsmodul. Dieses Verbindungsmodul oder die Verbindungsmodule bilden besonders bevorzugt im Wesentlichen die einzige elektrische Verbindung zwischen den entsprechenden Modulen und umfassen eine definierte Anzahl von elektrischen Leitungen und ganz besonders bevorzugt Pufferelemente und/oder ESD- Schutzstrukturen (Electrostatic Discharge), welche unerwünschte elektrische Kopplungen zwischen den Modulen, wie beispielsweise beim Auftreten von fehlerhaften Leitungsspitzen, über die Leitungen des Verbindungsmoduls unterbinden und somit das jeweilige Nachbarmodul schützen.

Der mindestens eine Temperatursensor ist vorzugsweise in einem Bereich im Wesentlichen zwischen zwei oder mehreren Modulen und/oder zwischen einzelnen Teilsystemen auf dem Chip angeordnet. Hierdurch lassen sich Temperaturkopplungen, insbesondere zwischen den Modulen, erfassen.

Es ist zweckmäßig, dass jeweils zumindest ein Temperatursensor zwischen dem Mikroprozessorsystemmodul und dem Leistungsmodul und dem Mikroprozessorsystemmodul und dem wenigstens einen Überwachungsmodul angeordnet ist. Dies ist vorteilhaft, um die Temperaturkopplung zwischen diesen Modulen zu überwachen. Es hat sich gezeigt, dass sich eine mögliche kritische Temperatur des Chips vorwiegend aufgrund eines Fehlers im Leistungsmodul einstellt und diese sich dann zunächst auf das Mikroprozessorsystemmodul überträgt und danach auf das mindestens eine Überwachungsmodul. Durch obige Positionierung der Temperatursensoren kann die Ausbreitung der thermischen Energie auf dem Chip erfasst werden und bestimmte Teile der Schaltungsanordnung können hierdurch rechtzeitig abgeschaltet werden. Zusätzlich können geeignete Maßnahmen, wie das Umschalten in einen Notbetrieb aufgrund der erfassten Überschreitung definierter Temperaturschwellen in definierten Bereichen des Chips, durchgeführt werden.

Die Temperaturüberwachungseinheit ist bevorzugt so ausgelegt, dass sie bei Feststellung des Erreichens und/oder Überschreitens einer definierten Temperatur zumindest eines Teilsystems und/oder Teilbereichs des Chips mindestens eine der folgenden Maßnahmen, insbesondere mittels eines Programms, durchführen und/oder veranlassen kann:
- Ein Fehlerreport wird erstellt und gespeichert, insbesondere in einem Speicher des Mikroprozessorsystemmoduls und/oder in einem externen Speicher,
- Teilsysteme der integrierten Schaltungsanordnung werden abgeschaltet oder in einen Notbetriebsmodus mit eingeschränkter Funktionalität versetzt, insbesondere in Abhängigkeit einer definierten Überschreitungsdauer einer definierten Temperaturschwelle und/oder Temperaturschwellenfunktion,
- Abschaltung mindestens eines externen Systems, insbesondere externer Aktuatoren, und
- Abschaltung wenigstens einer definierten Schnittstelleneinheit der integrierten Schaltungsanordnung, insbesondere einer Kommunikationsschnittstelle.

Das Überwachungsmodul ist zweckmäßigerweise so auf dem Chip angeordnet, dass sich zumindest in direkter, angrenzender Umgebung keine Leistungsschaltkreise, insbesondere keine Leistungsschaltkreise des Leistungsmoduls, befinden. Insbesondere ist/sind das eine Überwachungsmodul oder die mehreren Überwachungsmodule von dem wenigstens einen Leistungsmodul durch das Mikroprozessorsystemmodul räumlich auf dem Chip getrennt und darüber hinaus im Wesentlichen thermisch und elektrisch von einander entkoppelt. Dies ist vorteilhaft, da das Leistungsmodul im Wesentlichen das Modul ist, welches sowohl thermisch als auch elektrisch die größten Stör- bzw. Fehlerpotentiale aufweist und die Funktionalität des Überwachungsmoduls im Stör- bzw. Fehlerfall möglichst lange aufrecht erhalten werden muss, damit externe Aktuatoren und die Energieversorgung des Chips zuverlässig abgeschaltet werden können. Das mindestens eine Überwachungsmodul und das wenigstens eine Leistungsmodul sind besonders bevorzugt auf einander im Wesentlichen gegenüberliegenden Randbereichen des Chips angeordnet.

In den Bereichen im Wesentlichen zwischen den Modulen bzw. den Teilsystemen der Schaltungsanordnung sind bevorzugt keine Leistungsschaltkreise angeordnet. Durch diese Maßnahme können elektrische und thermische Kopplungen zwischen den Modulen relativ gering gehalten werden. Zusätzlich weisen diese Zwischenbereiche somit im Wesentlichen keine relevanten Störquellen auf.

Die integrierte Schaltungsanordnung ist zweckmäßigerweise so an eine externe Energieversorgungs-Abschalteinrichtung angeschlossen, dass die zumindest eine Temperaturüberwachungseinheit und/oder das wenigstens eine Überwachungsmodul und/oder das Mikroprozessorsystemmodul mittels zumindest eines Notabschaltpfades eine Unterbrechung der Energieversorgung von zumindest Teilen der integrierten Schaltungsanordnung bzw. Modulen bzw. Teilsystemen der Schaltungsanordnung durch die externe Energieversorgungs-Abschalteinheit veranlassen kann. Die integrierte Schaltungsanordnung ist insbesondere so ausgelegt, dass bei Erkennung des Überschreitens einer kritischen Temperatur und/oder einer programmierten/programmierbaren, funktionalen Temperaturschwelle, durch welche besonders bevorzugt die Dauer der Temperaturüberschreitung berücksichtigt wird, mittels zumindest eines Temperatursensors die Energieversorgung zumindest des Leistungsmoduls und des Mikroprozessorsystemmoduls durch das Überwachungsmodul unterbrochen wird. Im Fall, dass mehrere Überwachungsmodule auf dem Chip angeordnet sind, sind deren Notabschaltpfade diesbezüglich oder-verknüpft. Durch diese Maßnahmen ist sichergestellt, dass die Selbstabschaltung der integrierten Schaltungsanordnung, insbesondere zum Schutz gegen die eigene Zerstörung, gewährleistet ist. Ein Wiedereinschalten der Energieversorgung der Schaltungsanordnung mittels der Energieversorgungs-Abschalteinrichtung ist besonders bevorzugt nach einem relativ umfangreichen Selbsttest des Gesamtsystems möglich, wodurch eine fehlerhafte Notabschaltung wieder behoben werden kann. Ganz besonders bevorzugt bleibt die Energieversorgung des einen oder der mehreren Überwachungsmodule auch nach einer Notabschaltung mittels der externen Energieversorgungs-Abschalteinrichtung durch eine unabhängige Energieversorgungseinrichtung gewährleistet. Hierdurch ist sichergestellt, dass die Energieversorgungs-Abschalteinrichtung auch bei einem kritischen Zustand der integrierten Schaltungsanordnung stets mit einem definierten Signal des Notabschaltpfades angesteuert bleibt. Somit kann ein unerwünschtes Wiedereinschalten der Energieversorgungs-Abschalteinrichtung durch einen Störeffekt im Wesentlichen verhindert werden.

Die integrierte Schaltungsanordnung bildet vorzugsweise ein System-on-Chip, insbesondere ein Single-Chip-EBS-System, also beispielsweise eine Schaltungsanordnung für ein elektronisches Bremssystem, welche lediglich einen, gegen Fehler und äußere Störeinflüsse intern abgesicherten, fehlerredundanten, hochintegrierten Schaltkreis aufweist. Die integrierte Schaltungsanordnung ist deshalb besonders bevorzugt im Wesentlichen vollständig auf einem Stück eines Halbleitersubstrats (z.B. Silizium) realisiert. Hierdurch lässt sich die sonst vielfach übliche Trennung von Leistungselektronik und hochintegrierten Schaltkreisen vermeiden.

Die Erfindung bezieht sich auch auf eine Verwendung mindestens einer integrierten Schaltungsanordnung in Kraftfahrzeugen, insbesondere in einem Kraftfahrzeugregelungssystem.

Es wird alternativ bevorzugt vorgeschlagen die beiden Überwachungsmodule als integrierte Schaltkreise auf einem separaten, zusätzlichen Chip anzuordnen. Hierdurch können die Temperatursensoren zwischen den Überwachungsmodulen und dem Mikroprozessorsystemmodul entfallen. Ein Verbleiben derselben Sensoren ist alternativ beispielhaft allerdings auch möglich.

Die erfindungsgemäße integrierte Schaltungsanordnung ist zur Verwendung in den Bereichen Fahrzeugtechnik, bevorzugt Kraftfahrzeugtechnik, Automatisierungs- und Regelungstechnik vorgesehen. Insbesondere ist die integrierte Schaltungsanordnung für sicherheitskritische Applikationen, besonders bevorzugt mit Fail-Safe- und/oder Fail-Silent-Anforderungen, vorgesehen. Ganz besonders bevorzugt ist die integrierte Schaltungsanordnung für eine Verwendung im Kraftfahrzeugbereich für elektronische Brems- und Regelungssysteme und Airbagsteuerungen vorgesehen.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung
- Fig. 1: ein Schaltungsanordnungsbeispiel mit einem Prozessorkern und
- Fig. 2: eine beispielhafte, kernredundante Schaltungsanordnung mit redundanten Überwachungsmodulen.

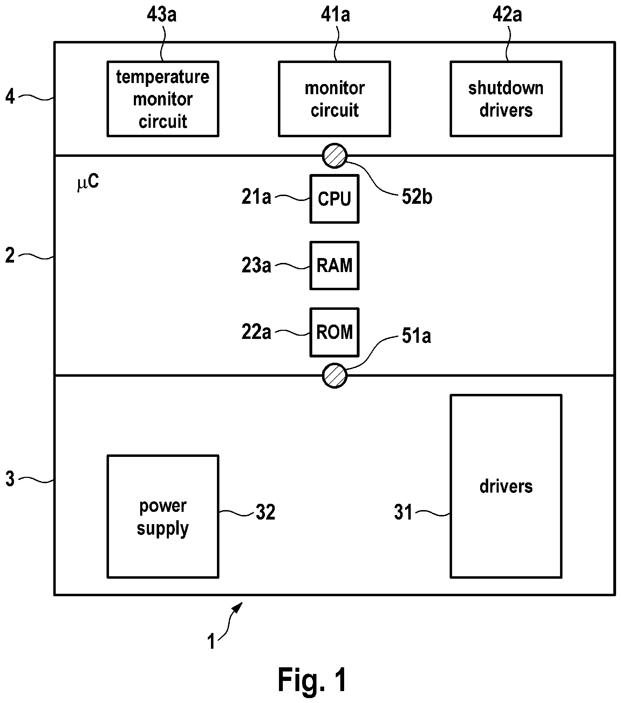

In Fig. 1 ist eine beispielhafte integrierte Schaltungsanordnung 1 veranschaulicht. Diese umfasst drei Module, nämlich ein Mikroprozessorsystemmodul 2, ein Leistungsmodul 3 und ein Überwachungsmodul 4, welche mit schematisch dargestellter Positionierung und gegenseitiger Abgrenzung zueinander alle auf einem gemeinsamen Chip angeordnet sind. Zwischen bzw. auf der Grenze zwischen Mikroprozessorsystemmodul 2 und Leistungsmodul 1 ist Temperatursensor 51a und zwischen Mikroprozessorsystemmodul 2 und Überwachungsmodul 4 ist Temperatursensor 52a angeordnet. Mittels dieser Temperatursensoren werden die Temperaturen des jeweiligen Bereichs des Chips sowie die thermische Kopplung zwischen den Chipmodulen erfasst und in Temperaturüberwachungseinheit 43a (temperature monitor circuit) ausgewertet. Mikroprozessorsystemmodul 2 umfasst Prozessorkern 21a, Festwertspeicher 22a und Schreibe-Lese-Speicher 23a. Leistungsmodul 3 umfasst Leistungsschaltkreise 31 zur Ansteuerung externer Verbraucher und Energieversorgungseinheit 32.

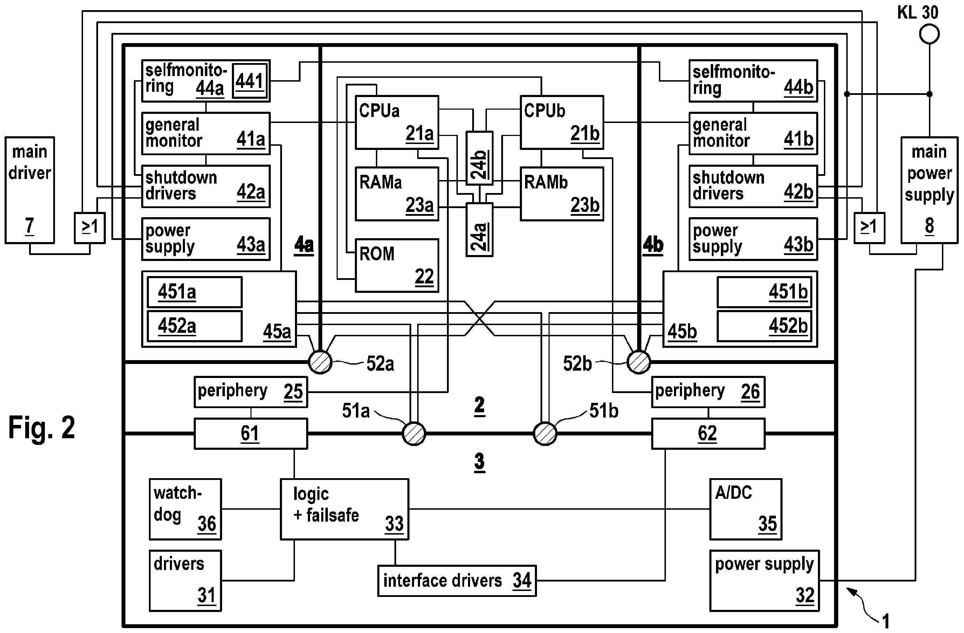

Fig. 2 zeigt ein Ausführungsbeispiel integrierter Schaltungsanordnung 1, welche als Single-Chip-Kontrolleinheit eines elektronischen Kraftfahrzeugbremssystems ausgebildet ist. Schaltungsanordnung 1 umfasst Mikroprozessorsystemmodul 2, Leistungsmodul 3, zwei redundante Überwachungsmodule 4a, 4b sowie zwei Verbindungsmodul 61 und 62 für die elektrische Verbindung zwischen Mikroprozessorsystemmodul 2 und Leistungsmodul 3. Sämtliche elektrische Verbindungsleitungen zwischen Mikroprozessorsystemmodul 2 und Leistungsmodul 3 verlaufen durch die Verbindungsmodule 61 und 62, wobei diese Verbindungsmodule Pufferschaltungen umfassen um elektrische Störeinflüsse zwischen Leistungsmodul 3 und Mikroprozessorsystemmodul 2 möglichst gering zu halten. Außerdem sind beispielgemäß zwischen diesen beiden Modulen 2 und 3 und ebenfalls zwischen Mikroprozessorsystemmodul 2 und beiden Überwachungsmodulen 4a, 4b jeweils elektrisch isolierte Bereiche in Form von eingeätzten Trennstrukturen (Trenches oder Deep-Trenches) ausgebildet. In diesen isolierten Bereichen jeweils zwischen Modul 2 und 4a, 4b und Modul 2 und 3 sind Temperatursensoren 52a, 52b, 51a, 51b angeordnet.

Mikroprozessorsystemmodul 2 weist zwei redundante Prozessorkerne 21 a und 21b auf, welchen ein gemeinsamer Festwertspeicher (ROM) 22 und jeweils ein Schreibe-Lese-Speicher 23a ,23b zugeordnet sind. Prozessorkerne 21a, 21b und Schreibe-Lese-Speicher 23a, 23b sind gemeinsam mittels zwei Prüfeinrichtungen 24a, 24b miteinander verbunden, welche die Ausgangsdaten der beiden Prozessorkerne 21a, 21b und bestimmte Speicherinhalte der Schreibe-Lese-Speicher 23a, 23b vergleichen und auch eine Datenübertragung ermöglichen. Die Prüfeinrichtungen 24a, 24b sind ebenfalls miteinander verbunden und vergleichen ihre Prüfdaten und überprüfen hierdurch auch die eigene Fehlerfreiheit. Die Prozessorkerne 21a, 21b sind des Weiteren jeweils mit einer Schnittstellenschaltung 25 und 26 verbunden, die an Verbindungsmodul 61 bzw. 62 zur Kommunikation mit Leistungsmodul 3 angeschlossen sind. Darüber hinaus sind 21a, 21b jeweils mit einer Monitoreinheit 41a, 41b bzw. dem Monitorschaltkreis des jeweiligen Überwachungsmoduls 4a, 4b verbunden.

Leistungsmodul 3 weist eine Logikeinheit mit integrierter Betriebsüberwachungseinheit 33 auf, welche mit Verbindungsmodul 61, einer Watchdogkomponente 36, welche Teilsysteme des Leistungsmoduls 3 beobachtet, einer Leistungsschaltkreiskomponente 31 zur Ansteuerung externer Verbraucher, beispielgemäß zur Ansteuerung von Hydraulikventilen, und einer Schnittstelleneinheit 34 verbunden ist. Diese Schnittstelleneinheit 34 weist Treiberstufen und definierte Busschnittstellen zum Anschluss externer Systeme. Die Konfiguration solch einer Busschnittstelle geschieht durch Logikeinheit 33, wobei die Busleitungen beispielgemäß im Wesentlichen direkt an Verbindungsmodul 62 angeschlossen sind. Darüber hinaus umfasst Leistungsmodul 3 einen Analog-/Digitalwandler 35 und eine Energieversorgungseinheit 32, welche sämtliche Komponenten Leitungsmoduls 3 in nicht dargestellter Weise mit Energie versorgt.

Die Temperatursensoren 51a, 51b, 52a, 52b sind jeweils an Temperaturüberwachungseinheit 45a und 45b der beiden redundanten Überwachungsmodule 4a und 4b angeschlossen. Temperaturüberwachungseinheiten 45a und 45b umfassen jeweils eine Auswerteschaltung 451 a und 451 b sowie eine Sensorselbsttestschaltung 452 a und 452 b. Dabei werden die Sensorsignale der Temperatursensoren 51a, 51b, 52a, 52b jeweils von Auswerteschaltung 451 a und 451 b ausgewertet und es wird geprüft, ob definierte Temperaturschwellen erreicht bzw. überschritten werden. Die ausgewerteten Temperaturdaten werden an die jeweilige Monitoreinheit 41a, 41 b übertragen. Die jeweilige Sensorselbsttestschaltung 452a, 452b überprüft zyklisch, selbstständig die korrekte Funktionsweise der Temperatursensoren 52a, 52b, 51a, 51b und der Auswerteschaltung 451a, 451b. Hierzu werden die Temperatursensorausgangssignale verzerrt. Darüber hinaus weist jedes Überwachungsmodul 4a, 4b eine unabhängige Energieversorgungseinrichtung 43a, 43b auf, wobei durch diese Energieversorgungseinrichtungen 43a und 43b beispielgemäß auch die Temperatursensoren 52a, 52b, 51a, 51b mit Energie versorgt werden. Im dargestellten Ausführungsbeispiel der Schaltungsanordnung 1 sind diese beiden Energieversorgungseinrichtungen 43a und 43b im Wesentlichen direkt mit dem elektrischen Potential der Klemme 30 verbunden. Überwachungsmodule 4a und 4b umfassen jeweils außerdem eine Abschalttreiberschaltung 42a und 42b, welche jeweils gemeinsam mittels eines "Oder"-Gatters sowohl mit einem externen Ventilhauptschalter 7 (main driver) zum Abschalten der Hydraulikventile als auch mit einer externen Energieversorgungs-Abschalteinrichtung 8 (main power supply) verbunden sind und diese beiden externen Treiberstufen 7 und 8 ansteuern können. Abschalttreiberschaltungen 42a und 42b werden ihrerseits jeweils von der Monitoreinheit 41a, 41b und zusätzlich jeweils von einer Schaltung zur Selbstüberwachung 44a und 44b des jeweiligen Überwachungsmoduls 4a, 4b angesteuert. Dabei weist Selbstüberwachungsschaltung 44a eine Selbstüberwachungsprüfeinrichtung 441 auf, die so ausgebildet ist, dass die beiden miteinander verbundenen Selbstüberwachungsschaltungen 44a und 44b der beiden Überwachungsmodule 4a, 4b ihre Selbstüberwachungsdaten miteinander vergleichen können um eine mögliche Fehlfunktion eines Überwachungsmoduls 4a, 4b festzustellen. Selbstüberwachungsschaltungen 44a und 44b sind ebenfalls mit der jeweiligen Monitoreinheit 41a, 41b verbunden. Temperaturüberwachungseinheiten 45a und 45b sind jeweils so ausgelegt, dass sie bei Feststellung des Überschreitens einer definierten ersten Temperaturschwelle beispielgemäß Leistungsmodul 3 und die externen Ventile abschalten. Bei Überschreiten einer definierten zweiten Temperaturschwelle wird zusätzlich Mikroprozessorsystemmodul 2 abgeschaltet. Außerdem wird jeweils ein Fehlerreport erstellt und in einem externen Speicher gespeichert. Bei Erfassen einer kritischen Temperatur oberhalb einer dritten Temperaturschwelle mittels mindestens einem der Temperatursensors 52a, 52 b, welche zwischen Mikroprozessorsystemmodul 2 und dem jeweiligen Überwachungsmodul 4a und 4b angeordnet sind, steuert zumindest eine Abschalttreiberschaltung 42a ,42b externe Energieversorgungs-Abschalteinrichtung 8 (main power supply) so an, dass die Energieversorgung des Leistungsmoduls 3 und des Mikroprozessorsystemmoduls 2 vollständig unterbrochen ist und auch eine fehlerhaft angesteuerte Energieversorgungseinheit 32 des Leitungsmoduls 3 keine Energie mehr bereitstellen kann. Bei einer Temperatur oberhalb der dritten Temperaturschwelle kann nicht mehr vollständig ausgeschlossen werden, dass Schaltungsanordnung 1 durch die thermische Energie zerstört wird. Die Energieversorgung der unabhängigen Energieversorgungseinrichtungen 43a und 43b beider Überwachungsmodule 4a, 4b wird hierdurch nicht beeinflusst, damit gewährleistet werden kann, dass Energieversorgungs-Abschalteinrichtung 8 auch im kritischen Zustand stets korrekt angesteuert wird und sich Energieversorgungs-Abschalteinrichtung 8 nicht aufgrund eines Fehlers selbstständig wieder einschaltet oder von anderer Seite aus fälschlicherweise wieder eingeschaltet wird. Im Fall, dass eine fehlerhaft Unterbrechung bzw. Abschaltung der Energieversorgungs-Abschalteinrichtung 8 durchgeführt wurde, beispielsweise weil ein Temperatursensor 51a, 51b, 52a, 52b bzw. eine Temperaturüberwachungseinheit 45a, 45b zu einem falschen Ergebnis kam, oder im Fall, dass die Temperatur des Chips wieder unter eine definierte Temperaturschwelle fällt, kann integrierte Schaltungsanordnung 1 wieder eingeschaltet und in Betrieb genommen werden. Hierzu veranlassen die Selbstüberwachungsschaltungen 44a und 44b der Überwachungsmodule 4a, 4b eine umfangreiche Selbstdiagnose.

## Patentansprüche

1. Integrierte, auf einem gemeinsamen Chip oder Chipträger angeordnete Schaltungsanordnung (1) für sicherheitskritische Anwendungen, insbesondere zur Nutzung als Steuerungs- und Regelungseinheit eines Kraftfahrzeugbremssystems, umfassend zumindest ein Mikroprozessorsystemmodul (2), welches mindestens einen Prozessorkern (21a, 21b) aufweist, dem wenigstens ein Festwertspeicher (22) und zumindest ein Schreibe-Lese-Speicher (23a, 23b) zugeordnet sind, mindestens ein Leistungsmodul (3) zur Ansteuerung von externen Verbrauchern und wenigstens zwei Überwachungsmodule (4a, 4b) zur Überwachung von zumindest Teilen und/oder Teilsystemen der Schaltungsanordnung (1), wobei die integrierte Schaltungsanordnung (1) wenigstens einen Temperatursensor (51a, 51b, 52a, 52b) zur Erfassung einer Chiptemperatur aufweist, wobei dem mindestens einen Temperatursensor (51a, 51b, 52a, 52b) wenigstens eine Temperaturüberwachungseinheit (45a, 45b)zugeordnet ist, welche mittels einer Auswerteschaltung (451a, 451b) und/oder eines Auswerteprogramms die Temperaturdaten des mindestens einen Temperatursensors (51a, 51b, 52a, 52b) auswertet und zumindest Teilsysteme der Schaltungsanordnung (1) abschalten und/oder in einen Notbetriebsmodus mit eingeschränkter Funktionalität versetzen kann, **gekennzeichnet durch**
zwei redundante Überwachungsmodule (4a, 4b), die auf einem gemeinsamen Chip angeordnet sind, wobei die Temperaturüberwachungseinheit (45a, 45b) Teil des Überwachungsmoduls (4a, 4b) ist und wobei die Überwachungsmodule (4a, 4b) jeweils eine unabhängige Energieversorgungseinrichtung (43a, 43b) aufweisen.

2. Schaltungsanordnung (1) nach Anspruch 1, **dadurch gekennzeichnet, dass** das Mikroprozessorsystemmodul (2) zwei redundante Prozessorkerne (21a, 21b) aufweist, denen jeweils oder gemeinsam sowohl zumindest ein Festwertspeicher (22) als auch wenigstens ein Schreibe-Lese-Speicher (23a, 23b) zugeordnet sind.

3. Schaltungsanordnung (1) nach Anspruch 1 oder 2, **dadurch gekennzeichnet, dass** die Temperaturüberwachungseinheit (45a, 45b) eine Sensorselbsttestschaltung (452a, 452b) aufweist, die einen oder mehrere Temperatursensoren (51a, 51b, 52a, 52b) und insbesondere die Auswerteschaltung (451a, 451b) und/oder das Auswerteprogramm, bezüglich ihrer korrekten Funktionsweise testet, in dem geprüft wird, ob definierte Temperaturschwellen erreicht bzw. überschritten werden.

4. Schaltungsanordnung (1) nach mindestens einem der Ansprüche 1 bis 3, **dadurch gekennzeichnet, dass** mindestens ein Temperatursensor (51a, 51b, 52a, 52b) in einem Bereich im Wesentlichen zwischen zwei oder mehreren Modulen (2, 3, 4a, 4b) auf dem Chip angeordnet ist.

5. Schaltungsanordnung (1) nach Anspruch 4, **dadurch gekennzeichnet, dass** jeweils zumindest ein Temperatursensor (51a, 51b, 52a, 52b) zwischen dem Mikroprozessorsystemmodul (2) und dem Leistungsmodul (3) und dem Mikroprozessorsystemmodul (2) und dem mindestens einen Überwachungsmodul (4a, 4b) angeordnet ist.

6. Schaltungsanordnung (1) nach mindestens einem der Ansprüche 2 bis 5, **dadurch gekennzeichnet, dass** die Temperaturüberwachungseinheit (45a, 45b) so ausgelegt ist, dass sie bei Feststellung des Erreichens und/oder Überschreitens einer definierten Temperaturschwelle zumindest eines Teilsystems und/oder Teilbereichs des Chips wenigstens eine der folgenden Maßnahmen, insbesondere mittels eines Programms, durchführen und/oder veranlassen kann:
- Ein Fehlerreport wird erstellt und gespeichert,
- Teilsysteme der Schaltungsanordnung (1) werden abgeschaltet oder in einen Notbetriebsmodus mit eingeschränkter Funktionalität versetzt, insbesondere in Abhängigkeit einer definierten Überschreitungsdauer einer definierten Temperaturschwelle und/oder Temperaturschwellenfunktion,
- Abschaltung mindestens eines externen Systems und
- Abschaltung wenigstens einer definierten Schnittstelleneinheit (34) der Schaltungsanordnung (1).

7. Schaltungsanordnung (1) nach mindestens einem der Ansprüche 1 bis 6, **dadurch gekennzeichnet, dass** das mindestens eine Überwachungsmodul (4a, 4b) so auf dem Chip angeordnet ist, dass sich in direkter, angrenzender Umgebung keine Leistungsschaltkreise (31,32,34), insbesondere keine Leistungsschaltkreise des Leistungsmoduls (3), befinden.

8. Schaltungsanordnung (1) nach mindestens einem der Ansprüche 1 bis 7, **dadurch gekennzeichnet, dass** das mindestens eine Überwachungsmodul (4a, 4b) und das mindestens eine Leistungsmodul (3) auf einander gegenüberliegenden Randbereichen des Chips angeordnet sind.

9. Schaltungsanordnung (1) nach mindestens einem der Ansprüche 1 bis 8, **dadurch gekennzeichnet, dass** in den Bereichen zwischen den Modulen (2, 3, 4a, 4b) und/oder zwischen Teilsystemen der Schaltungsanordnung (1) keine Leistungsschaltkreise angeordnet sind.

10. Schaltungsanordnung (1) nach mindestens einem der Ansprüche 3 bis 9, **dadurch gekennzeichnet, dass** diese mittels zumindest eines Notabschaltpfades an eine externe Energieversorgungs-Abschalteinrichtung (8) angeschlossen ist und die Temperaturüberwachungseinheit (45a, 45b) und/oder zumindest ein Überwachungsmodul (4a, 4b) über wenigstens einen Notabschaltpfad eine Unterbrechung der Energieversorgung von zumindest Teilen der integrierten Schaltungsanordnung (1) durch die externe Energieversorgungs-Abschalteinrichtung (8) veranlassen kann.

11. Verwendung mindestens einer integrierten Schaltungsanordnung nach mindestens einem der Ansprüche 1 bis 10 in Kraftfahrzeugen, insbesondere in einem Kraftfahrzeugregelungssystem.

## Claims

1. Integrated circuit arrangement (1), arranged on a shared chip or chip carrier, for safety-critical applications, particularly for use as a control and regulation unit in a motor vehicle braking system, comprising at least one microprocessor system module (2) which has at least one processor core (21a, 21b) with which at least one read-only memory (22) and at least one read/write memory (23a, 23b) are associated, at least one power module (3) for actuating external loads, and at least two monitoring modules (4a, 4b) for monitoring at least portions and/or subsystems of the circuit arrangement (1), wherein
the integrated circuit arrangement (1) has at least one temperature sensor (51a, 51b, 52a, 52b) for sensing a chip temperature, wherein the at least one temperature sensor (51a, 51b, 52a, 52b) has at least one associated temperature monitoring unit (45a, 45b) which can use an evaluation circuit (451a, 451b) and/or an evaluation program to evaluate the temperature data for the at least one temperature sensor (51a, 51b, 52a, 52b) and can shut down at least subsystems of the circuit arrangement (1) and/or put them into an emergency operating mode with restricted functionality, **characterized by** two redundant monitoring modules (4a, 4b) which are arranged on a common chip, wherein the temperature monitoring unit (45a, 45b) is part of the monitoring module (4a, 4b) and wherein the monitoring modules (4a, 4b) in each case have an independent power supply device (43a, 43b).

2. Circuit arrangement (1) according to Claim 1, **characterized in that** the microprocessor system module (2) has two redundant processor cores (21a, 21b) with which both at least one read-only memory (22) and at least one read/write memory (23a, 23b) are respectively or jointly associated.

3. Circuit arrangement (1) according to Claim 1 or 2, **characterized in that** the temperature monitoring unit (45a, 45b) has a sensor self-test circuit (452a, 452b) which tests one or more temperature sensors (51a, 51b, 52a, 52b) and particularly the evaluation circuit (451a, 451b) and/or the evaluation program for correct operation by testing whether defined temperature thresholds are reached or exceeded.

4. Circuit arrangement (1) according to at least one of Claims 1 to 3, **characterized in that** at least one temperature sensor (51a, 51b, 52a, 52b) is arranged on the chip in a region essentially between two or more modules (2, 3, 4a, 4b).

5. Circuit arrangement (1) according to Claim 4, **characterized in that** at least one temperature sensor (51a, 51b, 52a, 52b) is respectively arranged between the microprocessor system module (2) and the power module (3) and the microprocessor system module (2) and the at least one monitoring module (4a, 4b).

6. Circuit arrangement (1) according to at least one of Claims 2 to 5, **characterized in that** the temperature monitoring unit (45a, 45b) is designed such that upon establishing that a defined temperature threshold for at least one subsystem and/or subregion of the chip has been reached and/or exceeded it can perform and/or prompt at least one of the following measures, particularly using a program:
- an error report is created and stored,
- subsystems of the circuit arrangement (1) are shut down or put into an emergency operating mode with restricted functionality, particularly on the basis of a defined period for which a defined temperature threshold and/or temperature threshold function is exceeded,
- at least one external system is shut down, and
- at least one defined interface unit (34) of the circuit arrangement (1) is shut down.

7. Circuit arrangement (1) according to at least one of Claims 1 to 6, **characterized in that** the at least one monitoring module (4a, 4b) is arranged on the chip such that there are no power circuits (31, 32, 34), particularly no power circuits of the power module (3), in the direct, adjacent surroundings.

8. Circuit arrangement (1) according to at least one of Claims 1 to 7, **characterized in that** the at least one monitoring module (4a, 4b) and the at least one power module (3) are arranged on edge regions of the chip which are opposite one another.

9. Circuit arrangement (1) according to at least one of Claims 1 to 8, **characterized in that** the regions between the modules (2, 3, 4a, 4b) and/or between subsystems of the circuit arrangement (1) contain no power circuits.

10. Circuit arrangement (1) according to at least one of Claims 3 to 9, **characterized in that** it is connected to an external power supply shutdown device (8) by means of at least one emergency shutdown path, and the temperature monitoring unit (45a, 45b) and/or at least one monitoring module (4a, 4b) can use at least one emergency shutdown path to prompt an interruption in the power supply for at least portions of the integrated circuit arrangement (1) by the external power supply shutdown device (8).

11. Use of at least one integrated circuit arrangement according to at least one of Claims 1 to 10 in motor vehicles, particularly in a motor vehicle regulation system.

## Revendications

1. Ensemble de circuit (1) intégré, disposé sur une puce ou un support de puce commun pour des applications déterminantes pour la sécurité, utilisable en particulier en tant qu'unité de commande et de régulation d'un système de freinage de véhicule automobile, comprenant au moins un module de système à microprocesseur (2) qui comporte au moins un noyau processeur (21a, 21b) auquel sont associés au moins une mémoire morte (22) et au moins une mémoire vive (23a, 23b), au moins un module de puissance (3) destiné à attaquer des charges externes et au moins deux modules de surveillance (4a, 4b) destinés à surveiller au moins certaines parties et/ou certains sous-systèmes de l'ensemble de circuit (1), dans lequel l'ensemble de circuit (1) intégré comporte au moins un capteur de température (51a, 51b, 52a, 52b) destiné à détecter une température de puce, dans lequel au moins une unité de surveillance de température (45a, 45b) est associée à l'au moins un capteur de température (51a, 51b, 52a, 52b), laquelle unité de surveillance de température évalue au moyen d'un circuit d'évaluation (451a, 451b) et/ou d'un programme d'évaluation, les données de température de l'au moins un capteur de température (51a, 51b, 52a, 52b) et désactive au moins certains sous-systèmes de l'ensemble de circuit (1) et/ou peut les faire passer dans un mode de fonctionnement d'urgence présentant une fonctionnalité réduite, **caractérisé par**
deux modules de surveillance redondants (4a, 4b) qui sont disposés sur une puce commune, dans lequel l'unité de surveillance de température (45a, 45b) fait partie du module de surveillance (4a, 4b) et dans lequel les modules de surveillance (4a, 4b) comportent respectivement un dispositif d'alimentation en énergie (43a, 43b) indépendant.

2. Ensemble de circuit (1) selon la revendication 1, **caractérisé en ce que** le module de système à microprocesseur (2) comporte deux noyaux processeurs redondants (21a, 21b) auxquels sont associés respectivement ou en commun à la fois au moins une mémoire morte (22) et au moins une mémoire vive (23a, 23b).

3. Ensemble de circuit (1) selon la revendication 1 ou 2, **caractérisé en ce que** l'unité de surveillance de température (45a, 45b) comporte un circuit d'autotest de capteur (452a, 452b) qui teste un ou plusieurs capteurs de température (51a, 51b, 52a, 52b) et en particulier le circuit d'évaluation (451a, 451b) et/ou le programme d'évaluation en ce qui concerne leur bon fonctionnement en vérifiant si des seuils de température définis sont atteints ou dépassés.

4. Ensemble de circuit (1) selon au moins l'une des revendications 1 à 3, **caractérisé en ce qu'**il est prévu sur la puce au moins un capteur de température (51a, 51b, 52a, 52b) dans une zone située sensiblement entre deux modules (2, 3, 4a, 4b) ou plus.

5. Ensemble de circuit (1) selon la revendication 4, **caractérisé en ce qu'**il est prévu respectivement au moins un capteur de température (51a, 51b, 52a, 52b) entre le module de système à microprocesseur (2) et le module de puissance (3) et le module de système à microprocesseur (2) et l'au moins un module de surveillance (4a, 4b).

6. Ensemble de circuit (1) selon au moins l'une des revendications 2 à 5, **caractérisé en ce que** l'unité de surveillance de température (45a, 45b) est conçue de manière à ce que, lorsqu'il est établi qu'un seuil de température défini d'au moins un sous-système et/ou une région partielle de la puce a été atteint et/ou dépassé, au moins l'une des mesures suivantes peut être exécutée et/ou déclenchée, notamment au moyen d'un programme :
- un rapport d'erreur est établi et stocké,
- des sous-systèmes de l'ensemble de circuit (1) sont désactivés ou amenés à passer dans un mode de fonctionnement d'urgence présentant une fonctionnalité réduite, notamment en fonction d'une durée de dépassement définie d'un seuil de température défini et/ou d'une fonction de seuil de température définie,
- désactivation d'au moins un système externe, et
- désactivation d'au moins une unité d'interface définie (34) de l'ensemble de circuit (1).

7. Ensemble de circuit (1) selon au moins l'une des revendications 1 à 6, **caractérisée en ce que** l'au moins un module de surveillance (4a, 4b) est disposé sur la puce de manière à ce qu'aucun circuit de commutation de puissance (31, 32, 34), en particulier aucun circuit de commutation de puissance du module de puissance (3), ne se trouve directement à proximité.

8. Ensemble de circuit (1) selon au moins l'une des revendications 1 à 7, **caractérisé en ce que** l'au moins un module de surveillance (4a, 4b) et l'au moins un module de puissance (3) sont disposés sur des zones de bord mutuellement opposées de la puce.

9. Ensemble de circuit (1) selon au moins l'une des revendications 1 à 8, **caractérisé en ce qu'**aucun circuit de commutation de puissance n'est disposé dans les zones situées entre les modules (2, 3, 4a, 4b) et/ou entre des sous-systèmes de l'ensemble de circuit (1).

10. Ensemble de circuit (1) selon au moins l'une des revendications 3 à 9, **caractérisé en ce qu'**il est raccordé au moyen d'au moins un trajet de désactivation d'urgence à un dispositif de désactivation d'alimentation en énergie (8) externe et **en ce que** l'unité de surveillance de température (45a, 45b) et/ou l'au moins un module de surveillance (4a, 4b) peut déclencher, par l'intermédiaire d'au moins un trajet de désactivation d'urgence, une interruption de l'alimentation en énergie d'au moins certaines parties de l'ensemble de circuit (1) intégré par l'intermédiaire du dispositif de désactivation d'alimentation en énergie (8) externe.

11. Utilisation d'au moins un ensemble de circuit intégré selon au moins l'une des revendications 1 à 10 dans des véhicules automobiles, en particulier dans un système de régulation de véhicule automobile.
